# EUROPEAN PATENT APPLICATION

(11) **EP 1 672 515 A1**
(43) Date of publication of application: **21.06.2006**
(21) Application number: 05111551.7
(22) Date of filing: 01.12.2005
(51) Int. Cl.: G06F 17/00, G06F 1/00

(54) **System and method for utilizing a scanner in a search engine to protect from malicious content**

(30) Priority: 17.12.2004 US 13440
(71) Applicant: MICROSOFT CORPORATION, Redmond, Washington 98052-6399 (US)
(72) Inventor: Shelest, Art, WA 98052, Redmond (US); Seidman, Eytan D., WA 98052, Redmond (US)
(74) Representative: Grünecker, Kinkeldey, Stockmair & Schwanhäusser Anwaltssozietät

(57) **Abstract**

A system and method are incorporated within a search engine for preventing proliferation of malicious searchable content. The system includes a detection mechanism for detecting malicious searchable content within searchable content traversed by a web crawler. The system additionally includes a presentation mechanism for handling the detected malicious searchable content upon determination that the malicious searchable content is included in search results provided by the search engine. The presentation mechanism handles the detected malicious searchable content in order to prevent proliferation of the malicious searchable content to a receiver of the search results.

## Description

### CROSS-REFERENCE TO RELATED APPLICATIONS

None.

### STATEMENT REGARDING FEDERALLY SPONSORED RESEARCH OR DEVELOPMENT

None.

### TECHNICAL FIELD

Embodiments of the present invention relate to a system and method for implementing a search engine to prevent the spread of computer viruses.

### BACKGROUND OF THE INVENTION

In recent years, computer viruses have increasingly been spread from computer to computer through the use of malicious email attachments and through perpetuation of links to malicious web sites. Users of online services have become educated to avoid opening unsolicited email, opening attachments that come from unfamiliar sources, or going to the web sites advertised in unsolicited email. All of these steps have had the effect of lowering user risk of contracting a computer virus.

Despite user education, many users remain unaware that links provided through the use of trusted sources may be malicious. Although users who are Internet savvy may not visit web sites randomly, even the most cautious users continue to be exposed to the risks of visiting malicious web sites that are referenced by Internet search engines. The most common reason for visiting a new web site that a user has not seen before is that the web site was produced as a result by a search engine. The well recognized identity of search engines such as MSN.com or Google.com lends misdirected credence to any sites that the search engines present to the user as search results.

Accordingly a solution is needed that may be implemented through a search engine for preventing user computers from being harmed by visiting malicious web sites. Such a solution should be implemented to keep the user safe from malicious web sites that are presented as results by a trusted search engine.

### BRIEF SUMMARY OF THE INVENTION

Embodiments of the present invention include a method for implementing a search engine for preventing contamination that occurs when a receiver of search results selects an infected search result link. The search engine includes a crawler for traversing searchable content and indexing the traversed content. The method includes detecting any malicious searchable content within the traversed searchable content. The method additionally includes, upon generation of search results that include an infected link to the detected malicious searchable content, handling presentation of the infected link in order to shield the receiver from contamination.

In a further aspect of the invention, a system is incorporated within a search engine for preventing proliferation of malicious searchable content. The system includes a detection mechanism for detecting malicious searchable content within searchable content traversed by a web crawler. The system additionally includes a presentation mechanism for handling the detected malicious searchable content upon determination that the malicious searchable content is included in search results provided by the search engine, the presentation mechanism handling the detected malicious searchable content in order to prevent proliferation of the malicious searchable content to a receiver of the search results.

### BRIEF DESCRIPTION OF THE DRAWINGS

The present invention is described in detail below with reference to the attached drawings figures, wherein:

FIG. 1 is a block diagram illustrating an overview of a system in accordance with an embodiment of the invention;

FIG. 2 is block diagram illustrating a computerized environment in which embodiments of the invention may be implemented;

FIG. 3 is a block diagram illustrating virus handling components in accordance with an embodiment of the invention;

FIG. 4 is a block diagram illustrating a detection mechanism in accordance with embodiments of the invention;

FIG. 5 is a block diagram illustrating a detection mechanism in accordance with alternative embodiments of the invention;

FIG. 6 is a flow chart illustrating a method for indexing malicious web sites in accordance with embodiments of the invention; and

FIG. 7 is a flow chart illustrating a method for presentation of links by a search engine in accordance with embodiments of the invention.

### DETAILED DESCRIPTION OF THE INVENTION

**I. System Overview**

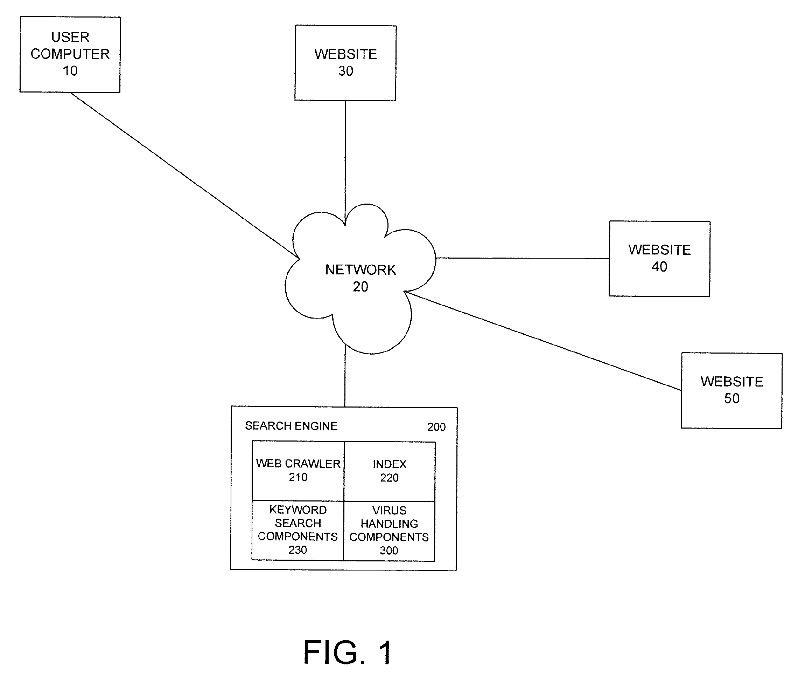

FIG. 1 illustrates a system for preventing the spread of malicious activity in accordance with an embodiment of the invention. A user computer 10 may be connected over a network 20, such as the Internet, with a search engine 200. The search engine 200 may access multiple web sites 30, 40, and 50 over the network 20. This limited number of web sites is shown for exemplary purposes only. In actual applications the search engine 200 may access large numbers of web sites over the network 20.

The search engine 200 may include a web crawler 210 for traversing the web sites 30, 40, and 50 and an index 220 for indexing the traversed web sites. The search engine 200 may also include a keyword search component 230 for searching the index 220 for results in response to a keyword query from the user computer 10. The search engine 200 may also include virus handling components 300 that detect malicious activity within the traversed web sites 30, 40, and 50 and handle the web sites displaying malicious activity in a manner designed to prevent the spread of the malicious activity.

As set forth above, embodiments of the invention are directed to a system and method for preventing the spread of viruses perpetuated by malicious web sites. Embodiments of the invention overcome the problems and drawbacks of the prior art by providing a method for lowering the risk that virus will proliferate throughout the Internet. In operation, the search engine 200 maintains the Internet indexing information 220. Thus, when the search engine 200 performs a search using the keyword search components 230 in response to a keyword query, the search engine 200 accesses the indexed information 220. The search engine 200 keeps its Internet indexing information 220 up to date by constantly crawling through web sites, both the sites already in the index information 220 and the sites that it has recently discovered and is visiting for the first time.

During such visits, the web crawler 210 obtains index-compatible information such as text descriptions from the web site and individual web pages. While visiting the web sites, the web crawler 210 will detect the presence of malicious activity. When such activity is detected, the virus handling components 300 will appropriately note the behavior. Alternatively, the search engine 200 may detect malicious activity in real time while performing a search based upon a user entered request. When a known malicious web site or web page, as previously noted or as noted in real time by the virus handling components 300, is produced through a search performed by the keyword search components 230, the search engine 200 will implement the virus handling components 300 to present the results to the user in a manner that reduces the risk of infection or malicious activity having harmful effects on the user computer 10.

Although embodiments of the invention are generally described herein with relation to web sites, web pages, and web content, any searchable content may be within the scope of the disclosed embodiments. For example, the searchable content may include videos accessible over the Internet. Furthermore, the searchable content need not be accessed over the Internet. The searchable content may be located on a hard drive or on a network drive and accessible by an appropriate crawler.

**II. Exemplary Operating Environment**

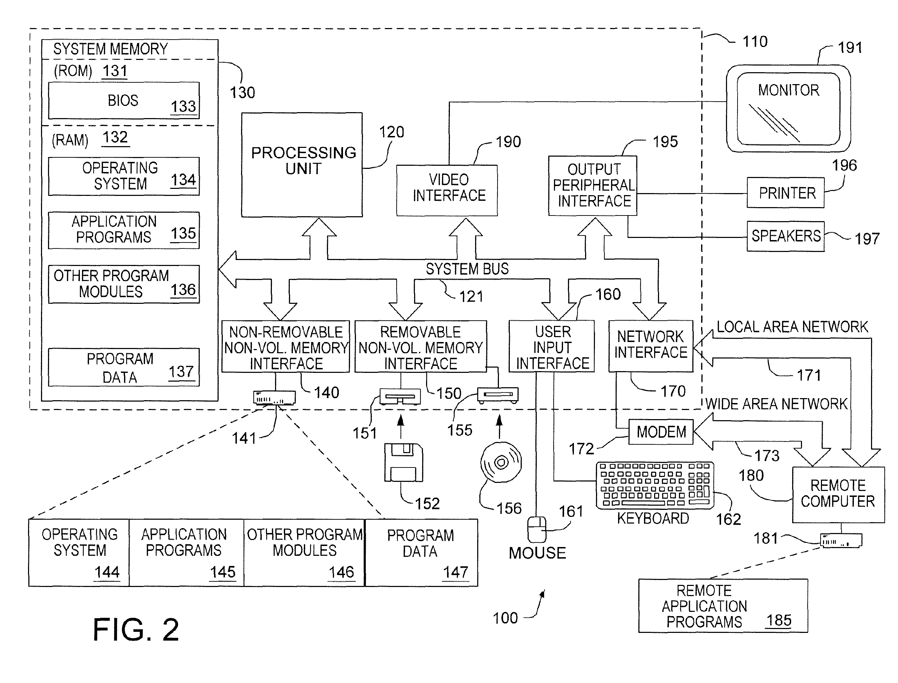

FIG. 2 illustrates an example of a suitable computing system environment 100 on which the system for preventing the spread of malicious activity may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is described in the general context of computer-executable instructions, such as program modules, being executed by a computer. Generally, program modules include routines, programs, objects, components, data structures, etc. that perform particular tasks or implement particular abstract data types. Moreover, those skilled in the art will appreciate that the invention may be practiced with other computer system configurations, including hand-held devices, multiprocessor systems, microprocessor-based or programmable consumer electronics, minicomputers, mainframe computers, and the like. The invention may also be practiced in distributed computing environments where tasks are performed by remote processing devices that are linked through a communications network. In a distributed computing environment, program modules may be located in both local and remote computer storage media including memory storage devices.

With reference to FIG. 2, the exemplary system 100 for implementing the invention includes a general purpose-computing device in the form of a computer 110 including a processing unit 120, a system memory 130, and a system bus 121 that couples various system components including the system memory to the processing unit 120.

Computer 110 typically includes a variety of computer readable media. By way of example, and not limitation, computer readable media may comprise computer storage media and communication media. The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 2 illustrates operating system 134, application programs 135, other program modules 136, and program data 137.

The computer 110 may also include other removable/nonremovable, volatile/nonvolatile computer storage media. By way of example only, FIG. 2 illustrates a hard disk drive 141 that reads from or writes to nonremovable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/nonremovable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through an non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 2, provide storage of computer readable instructions, data structures, program modules and other data for the computer 110. In FIG. 2, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 in the present invention will operate in a networked environment using logical connections to one or more remote computers, such as a remote computer 180. The remote computer 180 may be a personal computer, and typically includes many or all of the elements described above relative to the computer 110, although only a memory storage device 181 has been illustrated in FIG. 2. The logical connections depicted in FIG. 2 include a local area network (LAN) 171 and a wide area network (WAN) 173, but may also include other networks.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 2 illustrates remote application programs 185 as residing on memory device 181. It will be appreciated that the network connections shown are exemplary and other means of establishing a communications link between the computers may be used.

Although many other internal components of the computer 110 are not shown, those of ordinary skill in the art will appreciate that such components and the interconnection are well known. Accordingly, additional details concerning the internal construction of the computer 110 need not be disclosed in connection with the present invention.

**III. System and Method of the Invention**

As set forth above, FIG. 1 illustrates a system for preventing the spread of malicious activity in accordance with an embodiment of the invention. The user computer 10 may be connected over the network 20 with the search engine 200. The search engine 200 may access multiple web sites, such as 30, 40, and 50, over the network 20. The search engine 200 may implement the web crawler 210 for traversing the web sites 30, 40, and 50 and the index 220 for indexing the traversed web sites. The search engine 200 may utilize the keyword search component 230 for searching for results in response to a keyword query from the user computer 10. The search engine 200 may implement the virus handling components 300 to detect malicious activity within the traversed web sites 30, 40, and 50 and handle the web sites showing malicious activity in a manner designed to prevent the spread of the malicious activity.

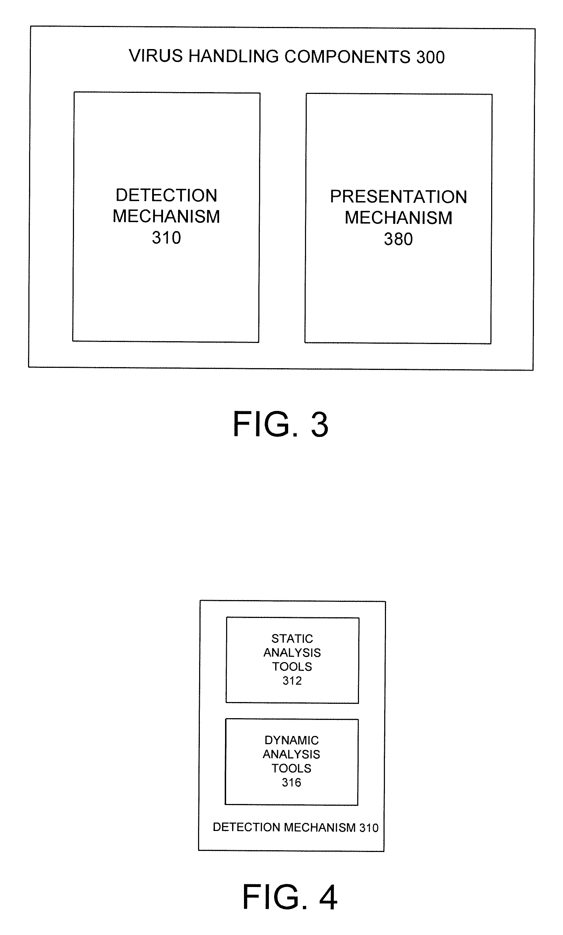

FIG. 3 illustrates virus handling components 300 in accordance with an embodiment of the invention. The virus handling components 300 may detect and handle viruses or alternatively may detect and handle other types of malicious activity. The virus handling components 300 may include a detection mechanism 310 and a presentation mechanism 380. The detection mechanism 310 may operate in conjunction with the web crawler 210 to detect malicious activity on sites visited by the web crawler 210. The presentation mechanism 380 may operate in conjunction with the keyword search components 230 to determine if a result found by the keyword search components 230 is a link exhibiting malicious behavior. If the presentation mechanism 380 locates a link within the results that exhibits malicious behavior, the presentation mechanism 380 performs a link handling routine to ensure that the user is protected from the malicious behavior.

The presentation mechanism 380 may include a number of different mechanisms for protecting the user computer 10 from the malicious link. The search engine 200 implements the keyword search component 230 to create a list of clickable links, often with some amount of associated text for each link. When a link points to a web site that was classified as malicious by the detection mechanism 310 during a recent crawl, a number of different actions may take place.

In a preferred embodiment, the presentation mechanism 380 may modify the infected link in order to prompt the web browser to provide a maximum level of protection, even if this protection occurs at the expense of functionality. As an example, the presentation mechanism 380 may prompt the web browser to protect itself by prepending an exclamation point to the malicious link. Thus, www.malicious.com might become "!http://www.malicious.com". In response, the modified link may perform a number of actions, such as for example disabling selected macros.

In an additional embodiment, the presentation mechanism 380 modifies the dangerous link to point to a proxy capable of shielding the user computer 10 from malicious activity that may take place. Similarly, the presentation mechanism 380 may modify the link to point to a disinfected cached copy of the web pages, stored by or on behalf of the search engine 200. The modified link may reference the disinfected cached copy saved at the time of crawling. Alternatively, the presentation mechanism 380 may present a modified link that points to a dynamically disinfected non-cached copy, where disinfecting occurs when the user selects the modified link.

In yet a further embodiment, the presentation mechanism 380 may create a warning to be shown to the user. The warning may indicate that content on the link, if accessed, may be malicious. Finally, in an additional alternative embodiment, the presentation mechanism may hide the dangerous link or not show the link to the user computer 10.

FIG. 4 illustrates a preferred embodiment of the detection mechanism 310. The detection mechanism 310 may include static analysis tools 312 and dynamic analysis 316. The static analysis tools 312 may inspect each traversed web page or web site for known code patterns. For example, the static analysis tools 312 may detect unnecessarily long HTML fields. The dynamic analysis tools 316 operate to detect known malicious behavior and traffic patterns. For example, the dynamic analysis tools 316 may determine that a web site initiates connection back to the client on a port often associated with vulnerabilities or that the visited web site is attempting to hack back into the search engine 200. The search engine 200 should be well-defended and should be configured to appear as a regular user computer to the visited web sites. Malicious web sites may distinguish between visitors such as search engines and user browsers before communicating with the visitor.

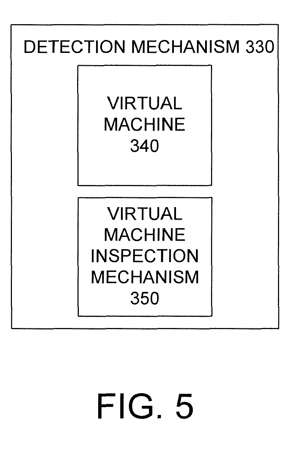

FIG. 5 illustrates an alternative embodiment of a detection mechanism 330. The detection mechanism 330 may include a disposable machine, such as a virtual machine 340 and a disposable or virtual machine inspection mechanism 350. In the embodiment shown in FIG. 5, the virtual machine 340 behaves similarly to a Virtual PC program that allows windows to run inside of windows. The inside windows may operate in a manner independent of the outside windows or primary machine. Thus, whatever happens to the inside window does not detrimentally impact the primary machine. Thus the virtual machine 340 includes a crawler that visits each web site.

After each visit, the virtual machine inspection mechanism 350 checks the inside crawler within the virtual machine 340 for infection or detrimental effects. Instead of looking for behavior on the visited web sites, the virtual machine inspection mechanism 350 looks for the result of each visit to determine if files or behaviors of the virtual machine 340 have changed. Thus, after the virtual machine 340 connected with the crawler 210 visits each web page or other unit of search implemented by the crawler 210, the virtual machine inspection mechanism 350 inspects the virtual machine 340 for signs of infection. If the virtual machine 340 is infected or compromised, then the visited web page or web site is known to be malicious. After a visit to a malicious web site or web page, the virtual machine inspection mechanism 350 re-initializes the virtual machine 340 before any additional web sites or web pages are visited.

Although the embodiment described above describes the use of a virtual machine as the disposable machine, other implementations are possible. For example, the disposable machine may also include a physical personal computer. The use of a virtual machine as the disposable machine provides the advantage of rapid recovery from an infected state.

The embodiment of the detection mechanism shown in FIG. 4 is an active detection mechanism and the embodiment of the detection mechanism shown in FIG. 5 is a presence detection mechanism. The embodiment of FIG. 4 prevents the behavior from occurring and the embodiment of FIG. 5 allows the behavior to occur on the virtual machine and thereafter ascertains whether the visited web site was malicious. In a further embodiment, the approaches of FIGs. 4 and 5 could be combined such that some visited sites that appear to be affected could be cached and analyzed after the crawling process.

The web crawler 210 may function to allow the detection mechanism 310 to detect malicious behavior on a page by page or site by site basis. Alternatively, the detection mechanism 310 or 330 may make the determination on the scale of individual web objects (e.g. embedded picture files), domain names, IP addresses or other grouping method of units of crawling. For example, a number of shared web sites may use a tilde (~) to denote portions of the web site owned by individual users. This way, http://www.example.com/users/~barney/demos/hack.htm is assumed to belong to user Barney, while http://www.example.com/users/~adam/index.htm is assumed to belong to user Adam. In this example, maliciousness of Barney's web page may project ill intent on an entire web sub-tree under Barney's control, but not on a web sub-tree operated by Adam.

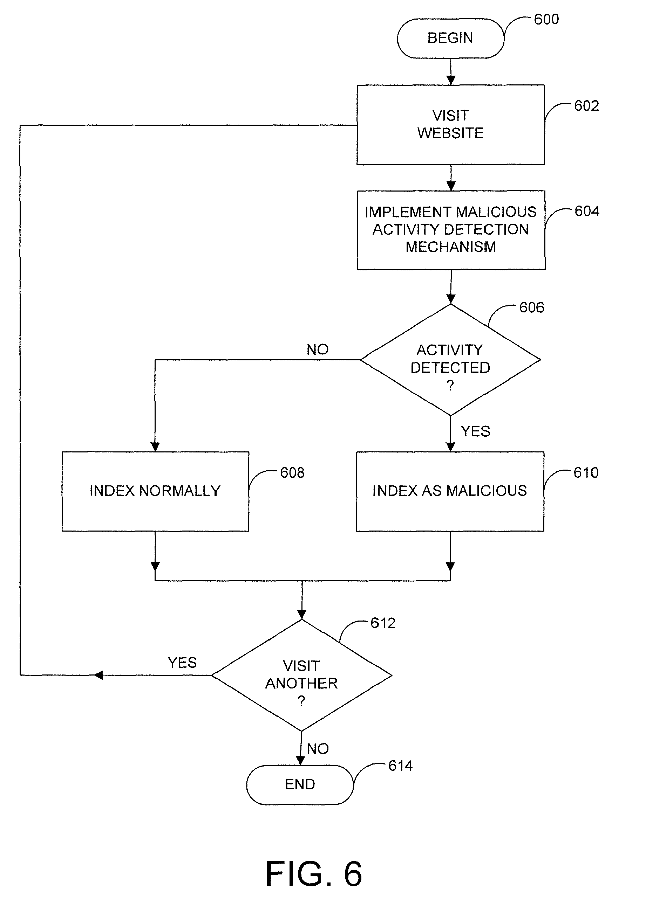

FIG. 6 illustrates a procedure for detecting malicious activity in accordance with an embodiment of the invention. The method begins at 600 and the web crawler visits a web site in step 602. In step 604, the search engine 200 implements the malicious activity detection mechanism 310 or the detection mechanism 330. If malicious activity is detected at 606, the web crawler indexes the web site as malicious in step 610. If no malicious activity is detected, the web crawler indexes the web site normally in step 608. If the web crawler elects to visit another site in step 612, the process returns to step 602.

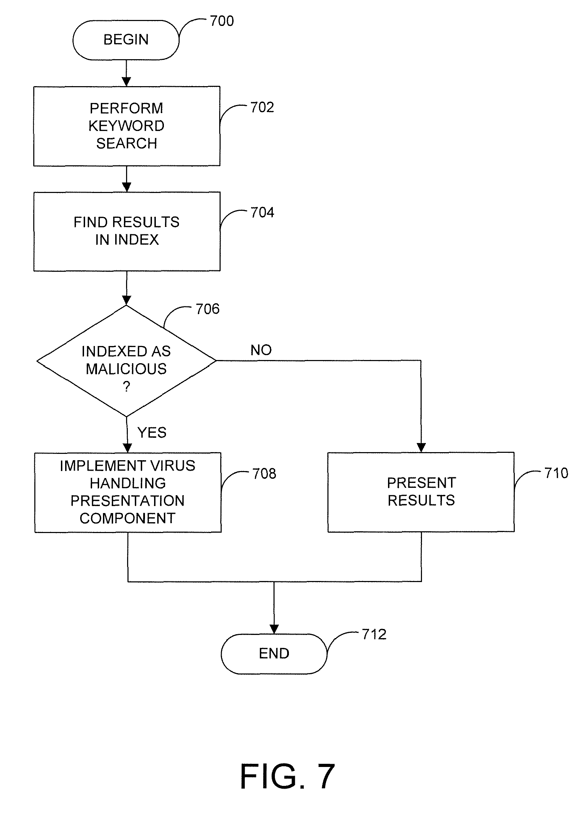

FIG. 7 illustrates a procedure for providing a user with search results in accordance with an embodiment of the invention. The procedure begins in step 700 and the search engine performs a keyword search in step 702. In step 704, the search engine finds the results in the index 210. If a result is indexed as malicious in step 706, the search engine implements the virus handling presentation mechanism 380 in step 708.

As set forth above, the presentation mechanism 380 can operate in one of several ways. The presentation mechanism 380 may hide the link from the user or warn the user that the link may be malicious. Alternatively, the presentation mechanism 380 may redirect the user to a sanitized cached version or a dynamically sanitized version of the malicious content. In an additional alternative approach, the presentation mechanism 380 may modify the link to point to a proxy. Finally, the presentation mechanism 380 may modify the link to alert the user browser to maximize defenses. Dangerous portions of site might be disabled. If the resultant web site is not indexed as malicious, the search engine presents results in step 710. The process ends at 712.

Although the embodiment of the detection mechanism 310 and 330 described above relate to detection of malicious activity during a crawling and indexing phase, malicious activity can also be detected in real time. In this implementation, the presentation mechanism 380 presents links redirecting the user to a proxy that will dynamically detect and disinfect malicious web content. Furthermore, a combination of detection during crawling and real time detection during access could be implemented.

In summary, a typical search engine keeps its Internet indexing information up to date by constantly crawling through web sites. During its visits, the crawler obtains index-compatible information such as text descriptions from the web site and individual web pages. While visiting the web sites, embodiments of the system of the invention may detect the presence of malicious activity. When the presence of such activity is detected, it will be appropriately noted and when later a known malicious web site or web page is produced as a search result, the presentation mechanism presents results to the user in a fashion that reduces the risk of infection or malicious activity directed at the user's computer. As set forth above, detection of malicious activity may alternatively occur in real time upon performing a user requested search.

While particular embodiments of the invention have been illustrated and described in detail herein, it should be understood that various changes and modifications might be made to the invention without departing from the scope and intent of the invention. The embodiments described herein are intended in all respects to be illustrative rather than restrictive. Alternate embodiments will become apparent to those skilled in the art to which the present invention pertains without departing from its scope.

From the foregoing it will be seen that this invention is one well adapted to attain all the ends and objects set forth above, together with other advantages, which are obvious and inherent to the system and method. It will be understood that certain features and sub-combinations are of utility and may be employed without reference to other features and sub-combinations. This is contemplated and within the scope of the appended claims.

## Claims

1. A method for implementing a search engine for preventing contamination that occurs when a receiver of search results selects an infected search result link, the search engine including a crawler for traversing searchable content and indexing the traversed content, the method comprising:
detecting any malicious searchable content within the traversed searchable content; and
upon generation of search results that include an infected link to the detected malicious searchable content, handling presentation of the infected link in order to shield the receiver from contamination.

2. The method of claim 1, wherein detecting any malicious searchable content comprises performing static analysis for detecting known code patterns.

3. The method of claim 2, wherein detecting any malicious searchable content comprises performing dynamic analysis for detecting traffic patterns.

4. The method of claim 1, wherein detecting any malicious searchable content comprises implementing a disposable machine that traverses searchable content without impacting a primary machine.

5. The method of claim 4, wherein detecting any malicious searchable content comprises implementing a disposable machine inspection mechanism for inspecting the disposable machine for infection after traversal.

6. The method of claim 4, further comprising reinitializing the disposable machine after each visit to infected searchable content.

7. The method of claim 1, wherein handling presentation of the infected link comprises modifying the infected link in order to prompt a user web browser to provide a maximum protection level.

8. The method of claim 1, wherein handling presentation of the infected link comprises modifying the infected link to point to a proxy capable of shielding the receiver from malicious activity.

9. The method of claim 1, wherein handling presentation of the infected link comprises modifying the infected link to point to a disinfected cached copy of the searchable content.

10. The method of claim 1, wherein handling presentation of the infected link comprises creating a warning and displaying the warning to the receiver.

11. A computer readable medium storing computer executable instructions for performing the method of claim 1.

12. A system incorporated within a search engine for preventing proliferation of malicious searchable content, the system comprising:
a detection mechanism for detecting malicious searchable content within searchable content traversed by a web crawler; and
a presentation mechanism for handling the detected malicious searchable content upon determination that the malicious searchable content is included in search results provided by the search engine, the presentation mechanism handling the detected malicious searchable content in order to prevent proliferation of the malicious searchable content to a receiver of the search results.

13. The system of claim 12, wherein the detection mechanism for detecting any malicious searchable content comprises static analysis tools for detecting known code patterns.

14. The system of claim 12, wherein the detection mechanism for detecting any malicious searchable content comprises dynamic analysis tools for detecting traffic patterns.

15. The system of claim 12, wherein the detection mechanism for detecting any malicious searchable content comprises a disposable machine that traverses searchable content without impacting a primary machine.

16. The system of claim 15, wherein the detection mechanism for detecting any malicious searchable content comprises a disposable machine inspection mechanism for inspecting the disposable machine for infection after traversal.

17. The system of claim 15, further comprising means for reinitializing the disposable machine after each visit.

18. The system of claim 12, wherein the presentation mechanism includes means for modifying an infected link in order to prompt a user web browser to provide a maximum protection level.

19. The system of claim 12, wherein the presentation mechanism handles handling presentation of the infected link by modifying an infected link to point to a proxy capable of shielding the receiver from malicious activity.

20. The system of claim 12, wherein the presentation mechanism handles presentation of an infected link by modifying the infected link to point to a disinfected cached copy of the searchable content.
